# EUROPEAN PATENT SPECIFICATION

(11) **EP 1 774 535 B1**
(45) Date of publication and mention of the grant of the patent: **29.10.2008**
(21) Application number: 05766665.3
(22) Date of filing: 01.07.2005
(51) Int. Cl.: G21C 17/00

(54) **PHASE CHANGE DETERMINATION OF A HAZARDOUS MATERIAL**
PHASENÜBERGANGSBESTIMMUNG IN EINEM GEFAHRENGUT
DETERMINATION DE TRANSITION DE PHASE DANS UNE MATIERE DANGEREUSE

(30) Priority: 02.07.2004 GB 0414809
(43) Date of publication of application: 18.04.2007
(73) Proprietor: Nuclear Decommissioning Authority, Cumbria CA24 3HU (GB)
(72) Inventor: QUAYLE, Michael John, Cleator Moor, Cumbria CA25 5HB (GB); GOODALL, Phillip Stephen, Beckermet, Cumbria CA21 2YP (GB); THOMSON, Steven James, Egremont, Cumbria CA22 2JU (GB); COCKBAIN, Neil, Cockermouth, Cumbria CA13 9DG (GB); TINSLEY, Timothy Peter, Bigrigg, Egremont CA22 2XA (GB); TOON, Gerard, Bigrigg, Egremont, Cumbria CA22 2RA (GB)
(74) Representative: Chalk, Anthony John
(86) International application number: PCT/GB2005/002578
(87) International publication number: WO 2006/003404

(56) References cited:
- EP-A- 0 349 166
- US-A- 5 748 496
- US-B1- 6 355 904
- SIEMENS D.H. ET AL: 'Development of HWVP Melter/Turntable Components for Canyon-Remote Maintenance and Replacement' PROCEEDINGS OF THE SYMPOSIUM OF WASTE MANAGEMENT AT TUCSON ARIZONA MARCH 24-28,1985 1985, XP008081866
- BRENDEN B. ET AL: 'Optical Imaging System for Ceramic Melters' WASTE MANAGEMENT vol. 15, 1995, pages 457 - 459, XP004175698
- PUYOU M. ET AL: 'Vitrification of Fission Product Solutions: Investigations of the Effects of Noble Metals on the Fabrication and Properties of R7T7 Glass' NUCLEAR TECHNOLOGY, AMERICAN NUCLEAR SOCIETY, CHICAGO, ILL, US 1995, XP008081867

## Description

### Field of the Invention

The present invention comprises an analytical method which facilitates the accurate determination of the crystallisation point of hazardous materials which present significant practical handling difficulties. More specifically, the method allows for the determination of the crystallisation, dissolution, melting and solidification points of radioactive samples within highly radioactive environments.

### Background to the Invention

The close observation of most non-hazardous materials, in order to carry out accurate determinations of crystallisation, dissolution, melting and solidification points, can generally be achieved by means of straightforward procedures, and is a matter of routine in the field of analytical chemistry. However, the position is very different in the case of many hazardous materials, most particularly radioactive materials, when primary consideration has to be given to health and safety requirements, and the necessity of preventing workers from exposure to, or contact with, the materials. As a consequence, serious handling difficulties are encountered, and the ability to perform many standard analytical determinations with the required degree of accuracy is severely curtailed.

Previous work with radioactive materials in highly radioactive environments concerning the determination of crystallisation points, and related data such as dissolution, melting and solidification points, has relied on the introduction of a radioactive liquor into a hot cell, and the subsequent observation of the cell and contents during the cooling process from a safe distance by, for example, an operative employing a pair of binoculars.

Clearly, such a procedure is highly subjective, and is not designed to provide data with a high degree of accuracy or reliability. The results will be subject to variation in accordance with such factors as the eyesight and personal judgement of the individual, as well as being reliant on the efficiency of the binoculars and their ability to provide appropriate data despite their significant physical separation from the material under investigation. There will, therefore, be great difficulty in comparing different sets of data, and in determining absolute values for the various parameters of different systems. In addition, there will, of course, be the usual experimental limitations associated with measurements involving the accurate determination of temperatures, and the requirement to provide controlled heating or cooling conditions.

In "Development of HWVP Melter/Turntable Components for Canyon-Remote Maintenance and Replacement", D H Siemes et al, Proceedings of the Symposium of Waste Management at Tucson, Arizona, March 24-28, 1985, the remote operability and maintainability of vitrification equipment is assessed using an apparatus which includes a camera to view the interior of a melter.

B Brenden et al, "Optical Imaging Systems for Ceramic Melters", Waste Management, Vol. 15, pages 457-459, 1995, discuss the use of video cameras to record optical images of the phase change characteristics of radioactive materials when being immobilised in glass matrices by treatment inside ceramic melters.

M Puyou et al, Vitrification of Fission Product Solutions: Investigation of the Effects of Noble Metals on the Fabrication and Properties of R7T7 Glass", Nuclear Technology, American Nuclear Society, Chicago, IL, US, 1995, have described tests in which video cameras have been used to observe the glass properties and melting pot behaviour of R7T7 glass in which additional quantities of insoluble dissolution fines containing noble metals are incorporated.

US-A-6355904 teaches a waste treatment system including a waste melter system and an air pollution control system. Hazardous and/or radioactive waste in drums is conducted through a waste feed system into a plasma chamber where the waste is exposed to heat from a plasma torch. Video cameras may be employed in order to facilitate optical recording of the waste within the plasma chamber and evaluation of the recorded images.

The present invention seeks to address the difficulties associated with the prior art approaches and to provide a method for the determination of crystallisation points, and related parameters, which is less reliant on such a subjective and inherently unreliable method of observation. The approach employed involves a greater reliance on objective observation and measurement of the systems, and allows for the determination of data by a means which is consistently reliable and repeatable, and allows for the determination of absolute values for different systems with a high degree of accuracy.

### Statements of Invention

Thus, according to the present invention, there is provided a method for the determination of the phase change characteristics of a hazardous material, said hazardous material comprising radioactive material, said method comprising optically recording images of a sample of the said material and objectively evaluating said images, wherein said optical recording of said images is carried out by means of a camera which is stationed at a remote location and said material is located in a container within a HA cell designed for the containment of highly radioactive material.

The phase change characteristics generally relate to a solid/liquid or liquid/solid phase change, and the method finds particular application in the determination of the crystallisation points of hazardous materials, and is equally applicable to the measurement of the dissolution, melting and solidification points of the said materials.

In the case of homogeneous samples, the method may be used for the determination of melting and solidification points whereas, with heterogeneous solvent/solute mixtures of materials, it is possible to obtain accurate measurements of temperatures of dissolution and crystallisation. Thus, the method displays great versatility and has the potential for wide applicability across a large range of hazardous materials.

Evaluation of the recorded images is then generally performed by means of a computer, which is able to objectively determine the point at which a phase change, such as crystallisation of the sample, is first seen to occur.

### Description of the Invention

The hazardous materials which may be evaluated by means of the method of the invention encompass a wide variety of radioactive materials.

The method of the invention is most suitably carried out by introducing the material to be evaluated into an isolated container, the temperature of which can be accurately controlled, such that a selected heating or cooling cycle can be applied, as appropriate. The container can be readily observed by the camera, positioned in a remote location, such that images of the material can be recorded.

The container is located within a so-called HA cell, specifically designed for the containment of highly radioactive materials.

The container generally holds a small amount of the material to be evaluated, the volume not exceeding 20 ml in the liquid state. Preferably, the volume of material in the container is in the region of 5-15 ml, most preferably about 10 ml.

The material may be introduced into the container in a liquid state and subjected to observation under controlled cooling conditions. However, in a preferred embodiment of the invention, the material is introduced into the container in the solid state and observed under the influence of a controlled heating cycle, designed to induce melting. It is seen, therefore, that the method of the invention may equally be applied to the determination of crystallisation or solidification points on the one hand and, on the other hand, the measurement of melting and dissolution points.

In a particularly preferred application, the method of the invention is applied to the determination of the crystallisation and re-dissolution points of a heterogeneous solvent/solute mixture, thereby facilitating the establishment of the metastable zone width of the sample. Other potential applications are to the measurement of induction times, and of dissolution rates at fixed temperatures.

The method of the invention allows for the production of high quality images, which may be observed online, or stored for offline viewing. Typically, a remotely located camera produces a rapid series of high contrast black and white images as the temperature of the material under investigation is allowed to fall or, more preferably, is raised. Data from the images is supplied to a computer, and subsequent evaluation of these images by means of a proprietary software program facilitates their interpretation and the production of a graph which shows a very distinctive point of inflexion, this point representing the occurrence of the phase change.

The evaluation of the experimental data in this way ensures that the process is free from human subjectivity and interpretation, with the consequent inevitable error factor associated with such procedures. Thus, by means of the method of the invention, it is possible to obtain accurate, reliable, objective data which, in any event, may be supplemented by the traditional human observation and interpretation of the systems to enable more balanced conclusions to be reached.

## Claims

1. A method for the determination of the phase change characteristics of a hazardous material, said hazardous material comprising radioactive material, said method comprising optically recording images of a sample of the said material and objectively evaluating said images, wherein said optical recording of said images is carried out by means of a camera which is stationed at a remote location and said material is located in a container within a HA cell designed for the containment of highly radioactive material.

2. A method as claimed in claim 1 wherein the phase change characteristics relate to a solid/liquid or liquid/solid phase change.

3. A method as claimed in claim 1 or 2 for the determination of at least one of the crystallisation, dissolution, melting and solidification points of hazardous materials.

4. A method as claimed in claim 1, 2 or 3 wherein said objective evaluation of said images is performed by means of a computer.

5. A method as claimed in claim 4 wherein said evaluation by means of a computer facilitates the production of a graph showing a point of inflexion at the temperature of the phase change.

6. A method as claimed in any one of claims 1 to 5 which comprises introducing the material to be evaluated into an isolated container, the temperature of which can be accurately controlled, such that a selected heating or cooling cycle can be applied.

7. A method as claimed in claim 6 wherein said container holds a volume not exceeding 20 ml of the material to be evaluated.

8. A method as claimed in claim 7 wherein said volume is in the region of 5-15 ml.

9. A method as claimed in claim 8, wherein said volume is about 10 ml.

10. A method as claimed in any preceding claim wherein the material is introduced into the container in a liquid state and observed under controlled cooling conditions to facilitate the determination of crystallisation or solidification points.

11. A method as claimed in any one of claims 1 to 9 wherein the material is introduced into the container in the solid state and observed under a controlled heating cycle to facilitate the determination of melting and dissolution points.

12. A method as claimed in any preceding claim which is applied to the determination of both the crystallisation and re-dissolution points of a heterogeneous solvent/solute mixture in order to facilitate the establishment of the metastable zone width of the sample.

13. A method as claimed in any one of claims 1 to 11 which is applied to the measurement of induction times and of dissolution rates at fixed temperatures.

## Patentansprüche

1. Verfahren zur Bestimmung der Phasenübergangs-Eigenschaften eines Gefahrstoffes, wobei der Gefahrstoff radioaktives Material umfasst, wobei das Verfahren optisches Aufzeichnen von Bildern einer Probe des Materials und eine objektive Auswertung der Bilder umfasst, wobei das optische Aufzeichnen der Bilder mittels einer Kamera erfolgt, welche an einem entfernten Ort positioniert ist, und sich das Material in einem Behälter innerhalb einer für die Umschließung hoch radioaktiven Materials ausgebildeten HA-Zelle befindet.

2. Verfahren nach Anspruch 1, wobei sich die Phasenübergangs-Eigenschaften auf einen Fest-/Flüssig- oder Flüssig-/Fest-Phasenübergang beziehen.

3. Verfahren nach Anspruch 1 oder 2 zur Bestimmung mindestens eines der Folgenden: des Kristallisierungs-, Lösungs-, Schmelz- und Erstarrungspunktes von Gefahrstoffen.

4. Verfahren nach Anspruch 1, 2 oder 3, wobei die objektive Auswertung der Bilder mittels eines Computers erfolgt.

5. Verfahren nach Anspruch 4, wobei die Auswertung mittels eines Computers die Erstellung eines Graphen ermöglicht, welcher einen Wendepunkt bei der Temperatur des Phasenübergangs aufweist.

6. Verfahren nach einem beliebigen der Ansprüche 1 bis 5, welches das Einführen des zu bewertenden Materials in einen isolierten Behälter umfasst, dessen Temperatur genau geregelt werden kann, so dass ein ausgewählter Heiz- oder Kühlzyklus angewendet werden kann.

7. Verfahren nach Anspruch 6, wobei der Behälter ein 20 ml nicht übersteigendes Volumen des zu bewertenden Materials enthält.

8. Verfahren nach Anspruch 7, wobei das Volumen im Bereich von 5-15 ml liegt.

9. Verfahren nach Anspruch 8, wobei das Volumen etwa 10 ml beträgt.

10. Verfahren nach einem beliebigen vorangehenden Anspruch, wobei das Material in einem flüssigen Zustand in den Behälter eingeführt und unter geregelten Kühlbedingungen beobachtet wird, um die Bestimmung des Kristallisierungs- oder Erstarrungspunktes zu ermöglichen.

11. Verfahren nach einem beliebigen der Ansprüche 1 bis 9, wobei das Material im festen Zustand in den Behälter eingeführt und in einem geregelten Heizzyklus beobachtet wird, um die Bestimmung von Schmelz- und Lösungspunkt zu ermöglichen.

12. Verfahren nach einem beliebigen vorangehenden Anspruch, welches auf die Bestimmung sowohl des Kristallisierungs- als auch des Wiederauflösungspunktes eines heterogenen Gemisches aus Lösungsmittel und gelöstem Stoff angewendet wird, um das Ermitteln der metastabilen Zonenbreite der Probe zu ermöglichen.

13. Verfahren nach einem beliebigen der Ansprüche 1 bis 11, welches auf die Messung von Induktionszeiten und Auflösungsgeschwindigkeiten bei festen Temperaturen angewendet wird.

## Revendications

1. Procédé pour la détermination de caractéristiques de changement de phases d'un matériau dangereux, ledit matériau dangereux comprenant des matériaux radio actifs, ledit procédé comprenant l'enregistrement optique d'images d'un échantillon dudit matériau et l'évaluation objective desdites images, tandis que ledit enregistrement optique desdites images est réalisé au moyen d'une caméra qui est disposée en un endroit éloigné et ledit matériau est disposé dans un conteneur dans une cellule HA conçue pour contenir des matériaux hautement radio actifs.

2. Procédé selon la revendication 1, **caractérisé en ce que** les caractéristiques de changement de phases concernent un changement de phases solide/liquide ou liquide/solide.

3. Procédé selon l'une des revendications 1 ou 2, pour la détermination d'au moins un des points de cristallisation, dissolution, mélange et solidification de matériaux dangereux.

4. Procédé selon l'une des revendications, 1, 2 ou 3, **caractérisé en ce que** ladite évaluation objective desdites images est réalisée au moyen d'un ordinateur.

5. Procédé selon la revendication 4, **caractérisé en ce que** ladite évaluation au moyen d'un ordinateur facilite la production d'un graphique montrant un point d'inflexion à la température de changement de phase.

6. Procédé selon l'une des revendications 1 à 5, **caractérisé en ce qu'**il comporte l'introduction du matériau destiné à être évalué dans un conteneur isolé, la température duquel peut être contrôlée de manière précise, de façon qu'un cycle choisi de chauffage ou de refroidissement puisse être appliqué.

7. Procédé selon la revendication 6, **caractérisé en ce que** ledit conteneur contient un volume qui n'excède pas 20 ml du matériau destiné à être évalué.

8. Procédé selon la revendication 7, **caractérisé en ce que** ledit volume est dans la gamme de 5 à 15 ml.

9. Procédé selon la revendication 8, **caractérisé en ce que** ledit volume est environ de 10 ml.

10. Procédé selon l'une des revendications précédentes, **caractérisé en ce que** le matériau est introduit dans le conteneur à l'état liquide et observé sous condition de refroidissement contrôlé, pour faciliter la détermination de point de cristallisation ou solidification.

11. Procédé selon l'une des revendications 1 à 9, **caractérisé en ce que** le matériau est introduit dans le conteneur à l'état solide et observé sous un cycle de chauffage contrôlé, pour faciliter la détermination de point de fusion et dissolution.

12. Procédé selon l'une des revendications précédentes, qui est appliqué à la détermination à la fois des points de cristallisation et de re-dissolution d'un mélange hétérogène solvant/soluté afin de faciliter l'établissement d'une largeur de zone métastable de l'échantillon.

13. Procédé selon l'une des revendications 1 à 11, qui est appliqué à la mesure des temps d'induction et des taux de dissolution à des températures fixées.
